# EUROPEAN PATENT SPECIFICATION

(11) **EP 0 602 902 B1**
(45) Date of publication and mention of the grant of the patent: **19.03.1997**
(21) Application number: 93309930.1
(22) Date of filing: 09.12.1993
(51) Int. Cl.: C08L 81/02

(54) **Polyphenylene sulfide resin compositions**
Polyphenylensulfid-Harzmassen
Compositions de résine de poly(sulfure de phénylène)

(30) Priority: 16.12.1992 JP 353882/92
(43) Date of publication of application: 22.06.1994
(73) Proprietor: GE PLASTICS JAPAN LIMITED, Chuo-Ku, Tokyo (JP)
(72) Inventor: Kabaya, Hidekazu, Moka City, Tochigi Prefecture (JP); Ishida, Hiromi, Moka City, Tochigi Prefecture (JP); Ohtomo, Takashi, Utsunomiya City, Tochigi Prefecture (JP); Kubo, Hiroshi, Moka City, Tochigi Prefecture (JP)
(74) Representative: Szary, Anne Catherine, Dr.

(56) References cited:
- EP-A- 0 341 422
- EP-A- 0 368 413
- EP-A- 0 472 913
- EP-A- 0 475 038
- DERWENT ACCESSION no. 91-256 221, Questel Telesystems (WPIL) DERWENT PUBLICATIONS LTD., London; & JP-A-03 166 261 (ASAHI CHEMICAL IND. KK)

## Description

This invention relates to polyphenylene sulfide (PPS) resin compositions. More specifically, it relates to PPS resin compositions suitable as materials for automotive exterior trim components that require painting.

In recent years, automotive exterior trim components have come to be made of plastics instead of metals. For example, materials consisting primarily of polyphenylene ether (PPE) resin or polyamide (PA) resin are used today as plastics for fenders.

These molded plastic products have the advantage that they can be simultaneously painted and simultaneously baked with the metal automotive body. On the other hand, their poor dimensional stability compared with that of metal may give rise to problems such as interference with other components on account of temperature changes. The use of PPS resin compositions was attempted in order to resolve problems such as these.

EP-A-0 472 913 describes an impact resistant resin composition comprising PPS, PPE, copolymers of nylon 6 and nylon 12 and/or nylon 6/36 and compatibilizers.

However, because automotive exterior trim components are painted and used, after painting, the surface of the molded product must remain smooth even under different temperature and humidity environments; other properties such as a high impact strength and dimensional stability are also required. No material has yet been found that satisfies all these requirements.

The object of this invention is to provide resin compositions that are suitable in automotive exterior trim material applications, which resin compositions are characterized in that, even when the painted molded product is furnished for environmental testing, it has a good surface smoothness and excellent properties such as impact resistance and dimensional stability.

The inventors conducted repeated and intensive studies, as a result of which, by combining specific PPS resins, and specific PA resins and PPE resins, they were able to obtain resin compositions that satisfy all the above-mentioned properties required of automotive exterior trim materials, and thus ultimately arrived at the present invention.

In other words, the resin compositions according to this invention are characterized by containing:
(A) 40-90 parts by weight of PPS resin having a sodium content of no more than 700 ppm,
(B) 5-55 parts by weight of polyphenylene ether resin, and
(C) 5-55 parts by weight of polyamide resin having a methylene group/amide group ratio of at least 6 (where A+B+C = 100 parts by weight), and
(D) 0.01-10 parts by weight of compatibilizing agent per 100 parts by weight of (A), (B) and (C) combined.

In this invention, it is preferable that the PPS resin (component A) include at least 70 mol% of constituent units having the general formula -φ-S- (where -φ- represents a phenylene group) because such compositions have excellent properties. When the amount of copolymerizing components is less than 30 mol%, components having meta linkages ((1) below), ortho linkages ((2) below), ether linkages ((3) below), sulfone linkages ((4) below), biphenyl linkages ((5) below), substituted phenylsulfide linkages ((6) below; here, R represents an alkyl, nitro, phenyl, alkoxy, carboxylic acid, or the metal salt of a carboxylic acid), or trifunctional phenylsulfide linkages ((7) below) may be included as long as these do not have a large influence on the crystallinity of the polymer. However, it is preferable that the copolymerizing components be present in an amount of no more than 10 mol%. In cases where a phenyl, biphenyl or naphthylsulfide linkages having three or more functional groups is selected, it is preferable that this be present in an amount of no more than 3 mol%, and even more preferably, no more than 1 mol%.

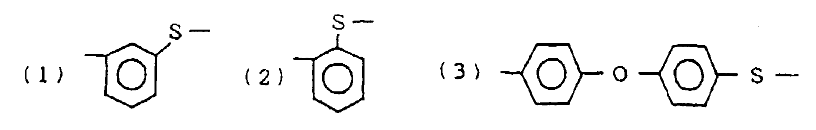

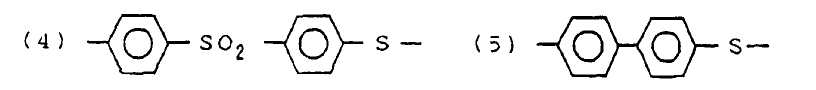

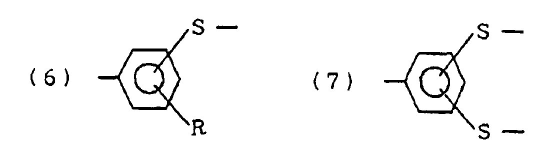

This PPS is prepared by a common production process, examples of which include (1) the reaction of a halogen-substituted aromatic compound with an alkali sulfide (see the specification of U.S. Patent No. 2,513,188, and Japanese Published Examined Patent Application [Kokoku] Nos. 44-27,671 (1969) and 45-3368 (1970)), (2) a condensation reaction on thiophenols in the presence of an alkali catalyst or a copper salt (see U.S. Patent No. 3,274,165 and British Patent No. 1,160,660), and (3) a condensation reaction between an aromatic compound and sulfur chloride in the presence of a Lewis acid catalyst (see Kokoku No. 46-27,255 (1971) and Belgium Patent No. 29,437). Any such process may be selected according to the intended aim. More specific examples of PPS polymerization methods that may be cited include:
(1) a method involving the polymerization of p-dichlorobenzene in the presence of sulfur and sodium carbonate, and a method involving the polymerization within a polar solvent in the presence of sodium sulfide, sodium sulfide and sodium hydroxide, or hydrogen sulfide and sodium hydroxide; or
(2) the self-condensation of p-chlorothiophenol.
Of these, a method involving the reaction of sodium sulfide and p-dichlorobenzene in the presence of an amide-type solvent such as N-methylpyrrolidone, dimethylacetamide, or a sulfone-type solvent such as sulfolane is appropriate. A preferable method at this time is one in which the degree of polymerization is adjusted by the addition of an alkali metal salt of a carboxylic acid or a sulfonic acid, or the addition of an alkali hydroxide.

The above-mentioned PPS resin generally contains about 1000-2000 ppm of alkali metal such as sodium that has been inadvertently admixed in the course of production. However, in this invention, it is necessary that the above PPS resin used as component (A) have a sodium (Na) content of no more than 700 ppm, preferably no more than 500 ppm, and most preferably no more than 300 ppm. When the Na content exceeds 700 ppm, the painted molding undergoes local blistering when subjected to environmental testing, making surface smoothness impossible to attain.

Treatment such as acid treatment or heat treatment can be employed as an effective means for reducing the Na content of these PPS resins to 700 ppm or less. Examples of such methods that may be cited include methods whereby the PPS is immersed in an acid such as acetic acid, hydrochloric acid, sulfuric acid, phosphoric acid or carbonic acid, or an aqueous solution thereof and, where necessary, appropriately heated and stirred; methods involving hot-water treatment in a pressure vessel, or combined methods thereof. In cases where these treatments are carried out, in order to eliminate the remaining acid or salt, it is preferable that this be washed several times with warm water.

The PPE resins serving as component (B) are polymers represented by formula (A) 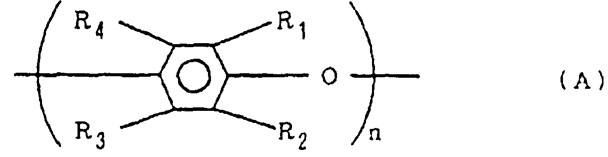 (where R₁, R₂, R₃ and R₄ are monovalent substituents selected from among hydrogen, halogens, alkyl groups, alkoxy groups, haloalkyl groups having at least two carbons between the halogen atoms and the phenyl ring, and haloalkoxy groups which contain no tertiary a carbons; and n is the degree of polymerization), it being possible for this to be just one polymer represented by the above general formula, or to be a copolymer obtained by the combination of two or more of these polymers. In preferable examples, R₁ and R₂ are alkyl groups having 1-4 carbons, and R₃ and R₄ are hydrogens or alkyl groups with 1-4 carbons. Specific examples that may be cited include poly(2,6-dimethyl-1,4-phenylene)ether, poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether and poly(2-ethyl-6-propyl-1,4-phenylene)ether. Examples that may be cited of the PPE copolymers include copolymers which contain some alkyl tri-substituted phenols such as 2,3,6-trimethylphenol among the above-mentioned polyphenylene ether repeating units. This may also be a copolymer obtained by grafting a styrene compound onto these PPE polymers. Examples that may be cited of polyphenylene ethers to which styrene compounds have been grafted include copolymers obtained by the graft polymerization onto the above PPEs of styrene, α-methyl-styrene, vinyltoluene or chlorostyrene as the styrene compound.

The polyamide component (C) used in this invention is a polyamide having a methylene group/amide group ratio of at least 6 in one molecule. When polyamide in which this ratio is less than 6 is used, the impact strength of the composition is very low. Polyamides that satisfy this condition include nylon 7, nylon 9, nylon 11, nylon 12, nylon 12/12, nylon 6/9, nylon 6/10, nylon 6/12 and nylon 6/36; copolymers that combine these; copolymers of these with polyamides that do not satisfy the above conditions (i.e., in which the methylene group/amide group ratio within one molecule is less than 6), such as copolymers of nylon 6 and nylon 12 (copolymers prepared from ε-caprolactam and ω-laurolactam or 12-aminododecanoic acid) (the term 'copolymer' as used here includes block copolymers and random copolymers). These may be used alone or may be used as mixtures of two or more thereof.

The resin composition of this invention preferably contains the above-described PPS resin compositions, PPE resin compositions and PA resin compositions serving as the constituent components in the following proportions. That is, of 100 parts by weight of PPS+PPE+PA, it should contain 40-90 parts by weight, and preferably 40-80 parts by weight, of PPS, and 5-55 parts by weight, and preferably 10-40 parts by weight, of PPE and PA each. When the amount of PPS is less than 40 parts by weight, the rigidity, heat resistance and dimensional stability that originate from the properties intrinsic to PPS resins decrease. When the amount of PPE is less than 5 parts by weight, the influence on the physical properties of water absorption by PA becomes large, and the heat resistance and rigidity decrease. When the amount of PA is less than 5 parts by weight, the appearance becomes poor and the brittleness that is a drawback of PPS resins becomes conspicuous.

In addition to the above ingredients, the compatibilizing agent serving as component (D) is also included in this invention. Any compatibilizing agent known for PPS, PPE and polyamides can be used as the compatibilizing agent. Desirable examples of these compatibilizing agents that may be cited include:
(a) citric acid, malic acid, agaric acid and their derivatives;
(b) compounds which contain in the molecule
   (i) carbon-carbon double bonds or triple bonds, and
   (ii) carboxyl groups, acid anhydride groups, acid amide groups, imide groups, carboxylic acid ester groups, epoxy groups, amino groups or hydroxyl groups; and
(c) at least one compound selected from among compounds having carboxyl groups or acid anhydride groups and acid halide groups.

The citric acid, malic acid, agaric acid and their derivatives in (a) above are cited in Tokuhyo No. 61-502,195 (1986). This invention can be carried out with the compounds represented by the formulas mentioned therein, but the use of the compounds cited above is especially preferable. Examples of derivatives that may be cited include ester compounds, amide compounds, anhydrides, hydrates and salts. Examples of acid ester compounds that may be cited include the acetyl ester and the mono- and distearyl esters of citric acid. Examples of acid amide compounds that may be cited include the N,N'-diethylamide, N,N'-dipropylamide, N-phenylamide, N-dodecylamide and N,N'-didodecylamide of citric acid, and the N-dodecylamide of malic acid. Examples of salts that may be cited include calcium malate, calcium citrate and potassium citrate.

The compounds in (b) above are cited in Japanese Published Unexamined Patent Application [Kokai] No. 56-49,753 (1981). Examples of these compounds that may be cited include maleic anhydride, maleic acid, fumaric acid, maleimide, maleic hydrazide, the reaction products of maleic anhydride and diamines, such as compounds having a structure represented by the following formulas 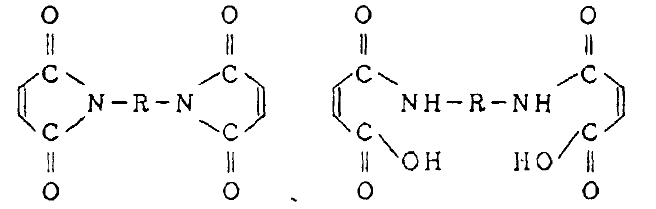 (where R represents an aliphatic or aromatic group), methylnadic anhydride, dichloromaleic anhydride and maleimide; natural oils and lipids such as soybean oil, tung oil, castor oil, linseed oil, flaxseed oil, cottonseed oil, sesame oil, rapeseed oil, peanut oil, camellia oil, olive oil, coconut oil and sardine oil; epoxidized natural oils and lipids such as epoxidized soybean oil; unsaturated carboxylic acids such as acrylic acid, butenoic acid, crotonic acid, vinylacetic acid, methacrylic acid, pentenoic acid, angelic acid, tiglic acid, 2-pentenoic acid, 3-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α-ethylcrotonic acid, 2,2-dimethyl-3-butenoic acid, 2-heptenoic acid, 2-octenoic acid, 4-decenoic acid, 9-undecenoic, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-tetradecenoic acid, 9-hexadecenoic acid, 2-octadecenoic acid, 9-octadecenoic acid, icosenoic acid, docosenoic acid, erucic acid, tetracosenoic acid, "mycoripenic" [phonetic]* acid, 2,4-pentadienoic acid, 2,4-hexadienoic acid, diallylacetic acid, geranium acid, 2,4-decadienoic acid, 2,4-dodecadienoic acid, 9,12-hexadecadienoic acid, 9,12-octadecadienoic acid, hexadecatrienoic acid, linoleic acid, linolenic acid, octadecatrienoic acid, icosadienoic acid, icosatrienoic acid, icosatetraenoic acid, ricinoleic acid, eleostearic acid, oleic acid, icosapentaenoic acid, erucic acid , docosa-dienoic acid, docosatrienoic acid, docosatetraenoic acid, docosapentaenoic acid, tetracosenoic acid, hexacosenoic acid, hexacodienoic acid, octacosenoic acid and triacontenoic acid, as well as esters, acid amides or anhydrides of these unsaturated carboxylic acids; allyl alcohol, crotyl alcohol, methyl vinyl carbinol, allyl carbinol, methyl propenyl carbinol, 4-pentene-1-ol, 10-undecen-1-ol, propargyl alcohol, 1,4-pentadien-3-ol, 1,4-hexadien-3-ol, 3,5-hexadien-2-ol, 2,4-hexadien-1-ol, alcohols represented by the formulas CₙH₂ₙ₋₅OH, CₙH₂ₙ₋₇ OH or CₙH₂ₙ₋₉OH (where n is a positive integer); unsaturated alcohols such as 3-butene-1,2-diol, 2,5-dimethyl-3-hexene-2,5-diol, 1,5-hexadiene-3,4-diol and 2,6-octadiene-4,5-diol; lower-molecular-weight polymers (e.g., with an average molecular weight of 500-10,000) or higher-molecular-weight polymers (e.g., with an average molecular weight of 10,000 or more) of unsaturated amines in which the OH group on unsaturated alcohols such as the above is substituted with an -NH₂ group or of butadiene or isoprene to which maleic anhydride and phenols have been added, or in which amino groups, carboxyl groups, hydroxyl group or epoxy groups have been introduced. Compound (b) also includes compounds which contain two or more functional more functional groups from group (i) and two or more functional groups which may be the same or different from group (ii).

Trimellitic acid anhydride chloride may be mentioned in particular as compound (c). This is cited in Tokuhyo No. 62-50,056 (1987).

Other examples that may be cited of the solubilizing agents serving as component (D) include unsaturated monomers and/or polymers containing epoxy groups and/or oxazolinyl groups.

Examples of epoxy group or oxazolinyl group-containing unsaturated monomers that may be cited include glycidyl methacrylate (GMA), glycidyl acrylate, vinyl glycidyl ether, the glycidyl ether of hydroxyalkyl (meth)acrylate, the glycidyl ether of polyalkylene glycol (meth)acrylate, and glycidyl itaconate.

Examples of preferable oxazolinyl group-containing unsaturated monomers that may be cited are those represented by the formula 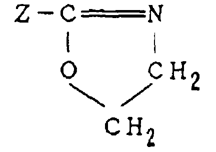 (where Z includes a polymerizable double bond). Preferable substituents Z include the following

CH₂ =CR- ,

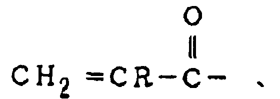

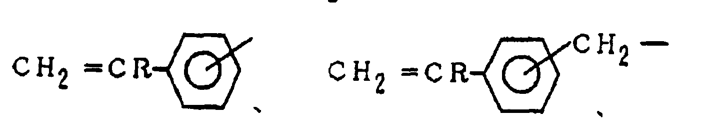

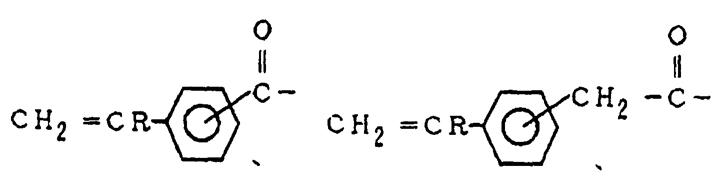

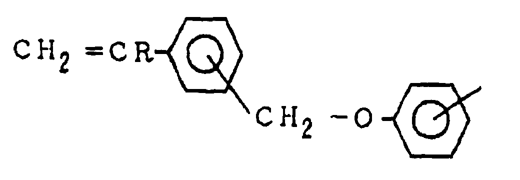

In these equations, R is a hydrogen atom or an alkyl group or alkoxy group having 1-6 carbons, such as a methyl group, an i-propyl group, an n-propyl group or a butyl group.

Especially desirable compounds are vinyloxazolines having the formula 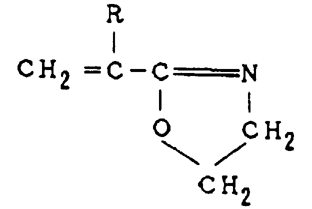 where R has the same meaning as above, and is preferably a hydrogen or a methyl group .

Examples that may be cited of polymers having epoxy groups or oxazolinyl groups include homopolymers of the above unsaturated monomers, copolymers of two or more of the above unsaturated monomers, and copolymers of one or more of the above unsaturated monomers and another unsaturated monomer. Examples of other unsaturated monomers that may be cited include aromatic vinyl monomers such as styrene (St); vinyl cyanide monomers such as acrylonitrile; unsaturated carboxylic acids or their derivatives, such as vinyl acetate, acrylic acid (or the salts thereof), methacrylic acid (or the salts thereof), acrylic acid esters, methacrylic acid esters, maleic acid or maleic anhydride, maleic acid ester and 2-norbornen-5,6-dicarboxylic acid (or the anhydride thereof); α-olefins such as ethylene, propylene, 1-butene, 1-pentene, 4-methyl-1-pentene, 1-hexene, 1-octene, 1-decene, 1-tetradecene, 1-hexadecene, 1-octadecene and 1-eicosene; and diene ingredients such as butadiene, isoprene, 1,4-hexadiene, 5-ethylidene-2-norbornene and 5-vinyl-2-norbornene.

Examples of the copolymers that may be cited include GMA/St, GMA/St/MMA (methyl methacrylate)/MA, GMA/St/acrylonitrile, GMA/MMA/ acrylonitrile, GMA/MMA, GMA/MMA/St, vinyl oxazoline/St, vinyl oxazoline/ MMA, ethylene/GMA and ethylene/vinyl acetate/GMA. Copolymers other than the above can also be used in this invention.

The solubilizing agent serving as component (D) above is generally used in an amount of 0.01-10 parts by weight, and preferably 0.1-3 parts by weight, per 100 parts by weight of (A) PPS, (B) PPE and (C) polyamide combined. When less than this, the intended effects become small; on the other hand, when greater than this, the heat resistance of the molded part undergoes a large decrease.

The composition according to this invention can include, for instance, 30 parts by weight or less, per 100 parts by weight of the PPS, PPE and PA combined, of a rubbery substance as an optional ingredient for further enhancing the impact strength.

The reference here to rubbery substances includes natural and synthetic polymer materials which are elastic bodies at room temperature. Specific examples that may be cited include natural rubbers, butadiene polymers, styrene-isoprene copolymers, butadiene-styrene copolymers (includes random copolymers, block copolymers and graft copolymers), isoprene polymers, chlorobutadiene polymers, butadiene-acrylonitrile copolymers, isobutylene polymers, isobutylene-butadiene copolymers, isobutylene-isoprene copolymers, acrylic acid ester polymers, ethylene-propylene copolymers, ethylene-propylenediene copolymers, Thiokol rubber, polysulfide rubber, polyurethane rubber, polyether rubber (e.g., polypropylene oxide) and epichlorohydrin rubber.

Also, depending on the intended object, other resins and additives may be added to the resin compositions of this invention during mixing of the resin or during molding, provided this does not compromise the physical properties thereof. Examples of such additives include pigments, dyes, reinforcing agents (glass fibers, carbon fibers), fillers (carbon black, silica, titanium oxide), heat resisting agents, antioxidants, weather-resisting agents, lubricants, mold release agents, crystal nucleating agents, plasticizers, fire retardants, fluidity enhancers, and antistatic agents.

A melt-kneading process is desirable as the method for producing the resin compositions of this invention. Although the use of a small amount of solvent is possible, it is generally not necessary. Examples that may be cited of the apparatus used include extruders, Banbury mixers, rollers and kneaders. These may be operated either in a batch-wise or a continuous manner. There is no particular restriction on the order in which the ingredients are mixed.

The above-described resin compositions of this invention are suitable as materials for automotive exterior trim components. This type of automotive exterior trim component is painted and used. There is no restriction on the painting method, it being possible to use any painting method, such as spray painting or electrostatic coating.

In the resin compositions according to this invention, because the Na content of the PPS resin is low, water-absorption blistering after painting of the molded part can be prevented, as a result of which the appearance of the molded part can presumably be kept smooth.

### Examples

This invention shall now be described by means of examples. The amounts of the various ingredients are indicated below in parts by weight.

The following were used in the examples and the comparative examples.

### Component (A)

- PPS-1:: "Topren"' T4 (a trademark of "Topren" KK) powder was poured into an aqueous solution of acetic acid (pH, 4) that had been heated to 90°C. After stirring was continued for about 30 minutes, this was filtered, then washed with approximately 90°C deionized water until the pH of the solution became 7. The solution was vacuum-dried for 24 hours at 120°C, and thereby rendered into a powder. The total sodium content of the PPS thus obtained was 110 ppm. This is referred to here as PPS-1.
- PPS-2:: "Topren" T4 (a trademark of "Topren" KK) having a total sodium content of 1300 ppm. This is referred to here as PPS-2.

### Component (B)

This was poly(2,6-dimethyl-1,4-phenylene)ether having an intrinsic viscosity (measured at 30°C in chloroform) of 0.46 dVg. This is referred to here as PPE.

### Component (C)

- PA-1:: A copolymer of nylon 6 and nylon 12 (polymerization molar ratio, 80:20; 7024B™, made by Ube Industries). This is referred to here as PA-1.
- PA-2:: Nylon 6,36 (PRIADIT 2054™, made by Unichema). This is referred to here as PA-2.
- PA-3:: Nylon 6 (1013B™, made by Ube Industries). This is referred to here as PA-3.

### Component (D)

Citric acid.

### Optional Ingredients

Rubbery substance: A 1:1 mixture of "Kraton" G 1651™ (a partially hydrogenated styrene-butadiene block copolymer (SEBS) made by Shell Chemical) and "Bondine" FX8000™ (made by Sumitomo CDF Kagaku).

### Examples 1-2 of the Invention, and Comparative Examples 1-4

The ingredients shown in Table 1 were mixed, extruded with a twin-screw extruder (screw diameter, 50 mm) set at 300°C, and pellets fabricated. These pellets were dried, then injection-molded at 300°C, thereby giving test pieces. The test pieces were submitted to the following tests, and the results shown in Table 1 were obtained.

### (1) Evaluation of Surface Smoothness after Water-Immersion Test on Painted Molded Parts:

A molded part measuring 10x10x3 mm was washed with isopropyl alcohol, following which "Soflex" No. 6100™ (Kansai Paint) was applied as the primer with an air spray gun so as to give a dry film thickness of 5 µm. After allowing this to stand for 10 minutes, KPX36 "Gray"™ (Kansai Paint) was applied as the surfacer by electrostatic coating so as to give a dry film thickness of 35 µm. This was cured by 30 minutes of baking in an air oven at 140°C. Next, WS "Amirak" W06TOP white was applied by electrostatic coating as the finish coat so as to give a dry film thickness of 35 µm. After leaving this to stand for 10 minutes, it was cured by 30 minutes of baking in a 140°C air oven, thereby giving test pieces of molded parts having a paint film.

The painted molded parts thus obtained were immersed in 40°C water for 24 hours, after which the surfaces were visually examined and evaluated. Samples having a smooth surface were marked as ○. and samples having a surface that was not smooth (with localized blistering) were marked as ×.

### (2) Falling Ball Impact Test:

The falling ball impact strength was measured at room temperature using a falling ball impact tester having a center of impact diameter of 12.7 mm, a bottom hole diameter of 31.7 mm, and a center of impact weight of 3.6 kg.

### (3) Linear Expansion Coefficient:

This was measured at -30°C to 80°C using a TMA (made by Seiko Denshi Kogyo). The samples were measured after one hour of annealing at 150°C.

**Table 1**

| | Examples | | Comparative Examples | | | |
|---|---|---|---|---|---|---|
| | 1 | 2 | 1 | 2 | 3 | 4 |
| **Ingredients** (parts by weight) | | | | | | |
| (A) PPS-1 | 45 | | 30 | 45 | -- | 45 |
| PPS-2 | -- | -- | -- | -- | 45 | -- |
| Na content in PPS (ppm) | 110 | | 110 | | 1300 | 110 |
| (B) PPE | 15 | | 20 | 15 | | 15 |
| (C) PA-1 | 20 | -- | 30 | 20 | | -- |
| PA-2 | -- | 20 | -- | -- | -- | -- |
| PA-3 | -- | -- | -- | -- | -- | 20 |
| (D) Compatibilizing agent | 0.35 | | 0.35 | -- | 0.35 | |
| **Optional Ingredient** | | | | | | |
| Rubbery substance | 20 | | 20 | | 20 | |
| **Evaluation Tests** | | | | | | |
| Surface smoothness | ○ | ○ | ○ | ○ | × | ○ |
| Falling ball impact strength (kg·cm) | 350 | | 350 | 25 | 350 | 50 |
| Linear expansion coefficient (x10⁻⁵) | 8.0 | 8.2 | 10.7 | 8.2 | 7.9 | |

The resin compositions of this invention had a good surface smoothness even after the painted molded parts were subjected to environmental testing, and their various properties such as impact resistance and dimensional stability were excellent. Hence, these are ideal as materials for use in automotive exterior trim components that require painting.

## Claims

1. A resin composition comprising :
(A) 40-90 parts by weight of PPS resin having a sodium content of no more than 700 ppm,
(B) 5-55 parts by weight of polyphenylene ether resin,
(C) 5-55 parts by weight of polyamide resin having a methylene group/amide group ratio of at least 6 (where A+B+C = 100 parts by weight), and
(D) 0.01-10 parts by weight of compatibilizing agent per 100 parts by weight of (A), (B) and (C) combined.

## Patentansprüche

1. Harzzusammensetzung, umfassend:
(A) 40-90 Gewichtsteile von PPS-Harz mit einem Natriumgehalt von nicht mehr als 700 ppm,
(B) 5-55 Gewichtsteile von Polyphenylenätherharz,
(C) 5-55 Gewichtsteile von Polyamidharz mit einem Methylengruppe/Amidgruppe-Verhältnis von wenigstens 6 (wobei A+B+C = 100 Gewichtsteile sind) und
(D) 0,01-10 Gewichtsteile von verträglichmachendem Mittel pro 100 Gewichtsteile von (A), (B) und (C) zusammengenommen.

## Revendications

1. Composition de résine comprenant :
(A) 40 à 90 parties en poids de résine de poly(sulfure de phénylène) ayant une teneur en sodium ne dépassant pas 700 ppm,
(B) 5 à 55 parties en poids de résine de poly(oxyde de phénylène),
(C) 5 à 55 parties en poids de résine de polyamide présentant un rapport groupe méthylène/groupe amide d'au moins 6, la somme A+B+C représentant 100 parties en poids, et
(D) 0,01 à 10 parties en poids d'agent assurant la compatibilité pour 100 parties en poids au total de (A), (B) et (C).
